# EUROPÄISCHE PATENTSCHRIFT

(11) **EP 0 540 841 B1**
(45) Veröffentlichungstag und Bekanntmachung des Hinweises auf die Patenterteilung: **10.08.1994**
(21) Anmeldenummer: 92114172.7
(22) Anmeldetag: 20.08.1992
(51) Int. Cl.: B23B 51/00

(54) **Bohrvorrichtung zur Herstellung von Bohrlöchern mit Hinterschneidung**
Drilling device for making holes with undercuttings
Dispostif de perçage à faire des trous à chambrage

(30) Priorität: 27.09.1991 DE 4132228
(43) Veröffentlichungstag der Anmeldung: 12.05.1993
(73) Patentinhaber: fischerwerke Artur Fischer GmbH & Co. KG, D-72178 Waldachtal (DE)
(72) Erfinder: Hoppe, Hartmut, W-7240 Horb (DE); Mayer, Burkhard, Dr.-Ing., W-7033 Herrenberg-Gültstein (DE)

(56) Entgegenhaltungen:
- EP-A- 0 038 405
- EP-A- 0 363 617

## Beschreibung

Die Erfindung betrifft eine Bohrvorrichtung zur Herstellung von Bohrlöchern mit Hinterschneidung mit einem Tiefenanschlag und einer am Tiefenanschlag angeordneten Absaugglocke gemäß der Gattung des Anspruches 1.

Aus der DE 38 35 025 ist eine Bohrvorrichtung der eingangs genannten Gattung bekannt, mit der während des Bohr- und Ausreibvorganges der Hinterschneidung eine Absaugung des anfallenden Bohrmehls durch eine axiale Durchgangsbohrung des Bohrschaftes möglich ist. Die bekannte Bohrvorrichtung weist auch eine als Schwenklager dienende Auswölbung des Bohrschaftes sowie einen Tiefenanschlag auf. Nach dem Aufsitzen des Tiefenanschlags auf der Außenfläche des Mauerwerks wird die Bohrerachse unter Nutzung der Auswölbung als Schwenkpunkt soweit ausgeschwenkt, bis die verjüngten Teile des Bohrschaftes an der Bohrlochwandung zur Anlage kommen. Durch Taumeln in dieser ausgeschwenkten Lage wird in der Bohrlochtiefe die Hinterschneidung ausgerieben. Bei der bekannten Bohrvorrichtung sind Bohrer und Bohreraufnahme über ein Gewinde miteinander verbunden und die Absaugglocke zwischen beiden Teilen drehbar gelagert. Als Tiefenanschlag dient ein am Bohrschaft angeformter Bund, der jedoch bei Berührung mit der Wandoberfläche gegen diese schlägt und ein Ausbrechen der Bohrlochöffnung verursachen kann. Dies tritt insbesondere beim Schwenkvorgang ein, da durch die Schrägstellung der Bohrerachse der Bund einseitig an der Mauerwerksoberfläche anliegt. Neben einer Beschädigung der Mauerwerksoberfläche kann durch die harten und einseitigen Schläge auch eine Beschädigung der Bohrvorrichtung, insbesondere der Gewindeverbindung zwischen Bohrer und Bohreraufnahme, eintreten.

Der Erfindung liegt die Aufgabe zugrunde, eine Bohrvorrichtung zur Herstellung von Bohrlöchern mit Hinterschneidung und mit einer Absaugeinrichtung zu schaffen, die im Aufbau einfach ist und Beschädigungen im Bereich der Bohrlochmündung sowie der Bohrvorrichtung vermeidet.

Die Lösung dieser Aufgabe wird durch die im Anspruch 1 angegebenen Merkmale erreicht. Der Tiefenanschlag besitzt ein elastisches ringförmiges Dämpfungselement, welches vorzugsweise aus Polyurethan oder einem entsprechenden Kunststoff besteht. Bei Anliegen des Tiefenanschlags an der Wandoberfläche ist das Dämpfungselement zwischen Wandoberfläche und einer sich am Bund des Bohrschaftes abstützenden Lagerscheibe wirksam und dämpft die von der Schlagbohrmaschine ausgehenden Schläge. Außerdem weist das Dämpfungselement eine hinreichende Elastizität auf, damit der Tiefenanschlag auch während der Schwenkbewegung des Bohrers vollflächig an der Wandoberfläche aufliegt. Bei der Schwenkbewegung wird zwar das Dämpfungselement entsprechend der Schwenkbewegung wechselweise elastisch deformiert, allerdings wird dabei die Position des Dämpfungselementes nicht verändert. Durch die konvex gewölbte Gleitfläche der Lagerscheibe und der entsprechend konkav gewölbten Stirnfläche des am Bohrschaft ausgebildeten Bundes kann der Bohrschaft durch Verschiebung der Flächen die Schwenkbewegung ausführen, ohne daß das Dämpfungselement und die mit dem Dämpfungselement verbundene Absaugglocke auf der Mauerwerksoberfläche verschoben werden. Das Dämpfungselement bietet somit sowohl den Vorteil, daß die Wandoberfläche nicht beschädigt wird, als auch daß für das Ausreiben der Hinterschneidung eine optimale Lage des Tiefenanschlags an der Wandoberfläche erreicht wird. Da der Bohrer außerdem aus einem Stück besteht, ergibt sich eine hohe Standfestigkeit und eine einfache Handhabung.

Die zwischen dem Dämpfungselement und dem Bund angeordnete Lagerscheibe besteht zweckmäßigerweise aus einem einsatzgehärteten Stahl. Damit wird die Reibung zwischen dem sich drehenden Bund und der mit dem Dämpfungselement feststehenden Lagerscheibe erheblich verringert. Die Lagerscheibe ist zweckmäßigerweise fest in die Stirnseite der Absaugglocke eingepreßt oder als Einlegeteil durch Umspritzen eingebunden.

Weitere zweckmäßige Ausgestaltungen des Erfindungsgegenstandes ergeben sich aus den Unteransprüchen und der Beschreibung.

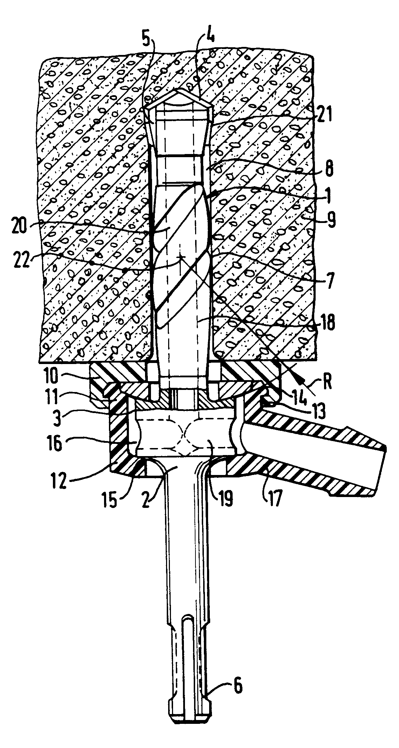

Die Erfindung wird nachfolgend anhand der Zeichnung näher erläutert.

Die Bohrvorrichtung besteht aus einem Bohrer 1, an dessen Bohrschaft 2 ein Bund 3 angeformt ist. Am vorderen Ende des Bohrschaftes befindet sich ein Bohrkopf 4, der seitlich am Schaft überstehende Seitenschneiden 5 aufweist. Am hinteren Ende ist der Bohrschaft 2 mit einer Aufnahme 6 versehen, die in ein Bohrfutter oder dgl. einer Bohrmaschine (nicht dargestellt) einspannbar ist. Zwischen dem Bohrkopf 4 und dem Bund 3 des Bohrers 1 befindet sich eine Auswölbung 7, die sich in Richtung Bohrkopf 4 und Bund 3 verjüngt. Der Durchmesser der Auswölbung entspricht etwa dem Größtmaß des Bohrkopfes 4, so daß bei der Erstellung des Bohrloches 8 im Mauerwerk 9 eine Anlage der Auswölbung 7 an der Bohrlochwandung erreicht wird.

Zur Begrenzung der Bohrlochtiefe ist der Bohrschaft 2 mit einem Tiefenanschlag versehen. Der Tiefenanschlag wird durch das Dämpfungselement 10 gebildet, das sich über die Lagerscheibe 11 am Bund 3 des Bohrschaftes 2 äbstützt. Die Lagerscheibe 11 ist in der vorderen Stirnseite der Absaugglocke 12 eingesetzt. Zur Halterung des Dämpfungselementes 10 weist dieses einen nach innen ragenden Rand 13 auf, der über einen umlaufenden Wulst 14 der Absaugglocke 12 übergestülpt ist. Die axiale Fixierung der Absaugglocke 12 auf dem Bund 3 des Bohrers ergibt sich durch die nach innen gerichtete Stirnkante 15 der Absaugglocke 12, die die rückwärtige Stirnfläche des am Bohrschaft ausgebildeten Bundes 3 hintergreift. Damit wird gleichzeitig auch eine Abdichtung des Absaugraumes 16 erreicht, in den der Anschlußstutzen 17 für einen an einen Staubsauger (nicht dargestellt) angeschlossenen Absaugschlauch mündet. Das beim Bohren und Ausreiben der Hinterschneidung anfallende Bohrmehl wird über die axiale Durchgangsbohrung 18 des Bohrschaftes und der Querbohrung 19 des Bundes 3 abgesaugt. Als äußere Luftkanäle zur Aufrechterhaltung eines kontinuierlichen Absaugstromes dienen Kerben bzw. Bohrmehlnuten 20, die im Bereich der Auswölbung 7 angeordnet sind.

Nach dem Aufsitzen des Dämpfungselementes 10 auf der Mauerwerksoberfläche wird zur Herstellung der Hinterschneidung 21 in der Bohrlochtiefe die Bohrerachse mit der Bohrmaschine soweit ausgeschwenkt, bis die sich in Richtung Bohrkopf 4 und Bund 3 verjüngenden Teile des Bohrschaftes 2 an der Bohrlochwandung zur Anlage kommen. Bei diesem Schwenkvorgang dient die Auswölbung 7 in Zusammenwirken mit der Bohrlochwandung als Schwenklager. Beim Ausschwenken verformt sich das beispielsweise aus Polyurethan bestehende Dämpfungselement 10, so daß eine flächige Auflage des Anschlags auf der Mauerwerksoberfläche sichergestellt ist. Beim Ausschwenkvorgang verschiebt sich die konkav gewölbte Stirnfläche des Bundes 3 auf der konvex gewölbten Stirnfläche der Lagerscheibe 11. Um eine exakte Führung zu erreichen, entspricht der Radius (R) der beiden gewölbten Flächen dem Abstand zum Mittelpunkt 22 der Auswölbung 7. Da sich gleichzeitig der Bund 3 auf der feststehenden Lagerscheibe 11 dreht, ist es zweckmäßig, die Lagerscheibe aus einem einsatzgehärteten Stahl herzustellen. Die Lagerscheibe 11 ist in der aus Kunststoff hergestellten Absaugglocke 12 durch Einpreßen oder Umspritzen gesichert.

## Patentansprüche

1. Bohrvorrichtung zur Herstellung von Bohrlöchern mit Hinterschneidung, mit einem eine axiale Durchgangsbohrung aufweisenden Bohrer (1), dessen Bohrkopf (4) seitlich am Schaft (2) überstehende Seitenschneiden (5) aufweist, und dessen Schaft im Abstand zum Bohrkopf mit einer als Schwenklager dienenden Auswölbung (7) sowie in einem Abstand zur Auswölbung mit einem als Bund (3) ausgebildeten Tiefenanschlag versehen ist, an dem eine Absaugglocke (12) drehbar gelagert ist, **dadurch gekennzeichnet**, daß der Tiefenanschlag mit einem elastischen, ringförmigen Dämpfungselement (10) versehen ist, das sich an einer Lagerscheibe (11) abstützt und mit der Absaugglocke (12) verbunden ist, und daß die Lagerscheibe (11) eine konvex gewölbte Gleitfläche aufweist, die an einer konkav gewölbten Stirnfläche des am Bohrschaft (2) ausgebildeten Bundes (3) anliegt.

2. Bohrvorrichtung nach Anspruch 1, **dadurch gekennzeichnet**, daß der Radius (R) der beiden gewölbten Flächen der Lagerscheibe (11) und des Bundes (3) gleich ist und dem Abstand zum Mittelpunkt (22) der Auswölbung (7) entspricht.

3. Bohrvorrichtung nach Anspruch 1, **dadurch gekennzeichnet**, daß das Dämpfungselement einen nach innen ragenden Rand (13) aufweist, der auf einen umlaufenden, an der vorderen Stirnseite der Absaugglocke (12) angeordneten Wulst (14) aufsteckbar ist.

4. Bohrvorrichtung nach Anspruch 1, **dadurch gekennzeichnet**, daß die Absaugglocke (12) mit ihrer hinteren, nach innen gerichteten Stirnkante die rückwärtige Stirnfläche des am Bohrschaft (2) ausgebildeten Bundes (3) hintergreift.

5. Bohrvorrichtung nach Anspruch 1, **dadurch gekennzeichnet**, daß der Bund mit einer Querbohrung (19) versehen ist, in die die axiale Durchgangsbohrung (18) des Bohrschaftes (2) mündet.

6. Bohrvorrichtung nach Anspruch 1, **dadurch gekennzeichnet**, daß der Bohrschaft (2) zumindest im Bereich seiner Auswölbung (7) in Längsrichtung sich erstreckende Kerben, Bohrmehlnuten (20) oder dgl. aufweist.

## Claims

1. A drilling device for producing drilled holes with an undercut, having a drill bit (1) with an axial through-bore, the drilling head (4) of which drill bit has lateral cutting edges (5) projecting laterally from the shank (2), and the shank of which drill bit is provided at a distance from the drilling head with an enlargement (7) acting as a swivel bearing and at a distance from the enlargement with a depth stop in the form of a collar (3), on which a suction bell (12) is rotatably mounted, characterized in that the depth stop is provided with a resilient, ring-shaped cushioning element (10) which bears on a bearing washer (11) and is connected to the suction bell (12), and the bearing washer (11) has a convexly curved sliding face which rests on a concavely curved end face of the collar (3) formed on the drill shank (2).

2. A drilling device according to claim 1, characterized in that the radius (R) of the two curved faces of the bearing washer (11) and the collar (3) is identical, and corresponds to the distance to the mid-point (22) of the enlargement (7).

3. A drilling device according to claim 1, characterized in that the cushioning element has an inwardly projecting edge (13) which is arranged to be positioned on a circumferential bead (14) arranged at the front end of the suction bell (12).

4. A drilling device according to claim 1, characterized in that the suction bell (12) engages with its rear inwardly directed end edge behind the rear end face of the collar (3) formed on the drill shank (2).

5. A drilling device according to claim 1, characterized in that the collar is provided with a transverse bore (19) into which the axial through-bore (18) of the drill shank (2) merges.

6. A drilling device according to claim 1, characterized in that the drill shank (2) has longitudinally extending channels, drilling dust grooves (20) or similar means at least in the region of its enlargement (7).

## Revendications

1. Dispositif de perçage pour la réalisation de trous avec contre-dépouille, dispositif doté d'un foret (1) comportant un trou traversant axial, dont la tête (4) de foret présente des tranchants latéraux (5) faisant saillie latéralement à partir du fût (2) et dont le fût est muni, à l'écart de la tête de foret, d'une partie renflée (7) servant de palier de pivotement ainsi que d'une butée de profondeur formant un collet (3) qui est situé à distance de la partie renflée et sur lequel est montée de façon rotative une cloche d'aspiration (12), dispositif caractérisé en ce que la butée de profondeur est munie d'un élément amortisseur (10) élastique, de forme annulaire, qui s'appuie sur un disque d'appui (11) et qui est relié à la cloche d'aspiration (12), et en ce que le disque d'appui (11) présente une surface de glissement à bombement convexe, qui est appliquée sur une surface frontale renflée du collet (3) formé sur le fût (2) de foret.

2. Dispositif de perçage selon la revendication 1, caractérisé en ce que le rayon (R) des deux surfaces bombées du disque d'appui (11) et du collet (3) est égal et correspond à la distance entre le point médian (22) et la partie renflée (7).

3. Dispositif de perçage selon la revendication 1, caractérisé en ce que l'élément amortisseur présente un rebord (13) qui dépasse vers l'intérieur et qui peut être enfilé sur une nervure (14) circulaire ménagée sur le côté frontal avant de la cloche d'aspiration (12).

4. Dispositif de perçage selon la revendication 1, caractérisé en ce que la cloche d'aspiration (12) passe, par sa surface frontale dirigée vers l'intérieur, sous la surface frontale arrière du collet (3) formé sur le fût (2) de foret.

5. Dispositif de perçage selon la revendication 1, caractérisé en ce que le collet est muni d'un trou transversal (19) dans lequel débouche le trou traversant (18) du fût (2) de foret.

6. Dispositif de perçage selon la revendication 1, caractérisé en ce que le fût (2) du foret présente, au moins dans la zone de sa partie renflée (7), des rainures ou gorges (20) s'étendant dans le sens longitudinal et destinées à véhiculer la poussière de perçage.
